## Europäisches Patentamt

## European Patent Office

## Office européen des brevets

(19)

(11) Veröffentlichungsnummer: **0 170 306**
**B1**

(12) **EUROPÄISCHE PATENTSCHRIFT**

(45) Veröffentlichungstag der Patentschrift:
03.05.89

(21) Anmeldenummer: **85200982.8**

(22) Anmeldetag: **20.06.85**

(51) Int. Cl.⁴: **H 02 K 1/14,** H 02 K 21/18

(54) **Zweipoliger Einphasensynchronmotor mit permanentmagnetischem Rotor (Modulmotor).**

(30) Priorität: **28.06.84 DE 3423777**

(43) Veröffentlichungstag der Anmeldung:
**05.02.86 Patentblatt 86/6**

(45) Bekanntmachung des Hinweises auf die Patenterteilung:
**03.05.89 Patentblatt 89/18**

(84) Benannte Vertragsstaaten:
**AT DE FR GB IT**

(56) Entgegenhaltungen:
EP-A- 0 116 379
BE-A- 659 492
DE-A- 1 763 667
FR-A- 2 031 074
US-A- 3 469 132
US-A- 4 030 058

PATENTS ABSTRACTS OF JAPAN, Band 5, Nr. 55
(E-52)(727), 16. April 1981; & JP - A - 566 661 (RHYTHM
TOKEI K.K.) 23.01.1981

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT AT**

(72) Erfinder: **Bertram, Leo, Am Sender 10, D-5190 Stolberg
(DE)**
Erfinder: **Schemmann, Hugo, Dr., Zwartebergweg 6,
NL-6371 XD Schaesberg (NL)**

(74) Vertreter: **Kupfermann, Fritz–Joachim, Dipl.-Ing. et al,
Philips Patentverwaltung GmbH
Wendenstrasse 35 Postfach 10 51 49,
D-2000 Hamburg 1 (DE)**

# Beschreibung

Die Erfindung bezieht sich auf einen Elektromotor mit einem U-förmig gebogenen Statoreisen, auf dessen Eisenschenkeln Induktionsspulen vorgesehen sind, und mit vom Statoreisen trennbaren Polschenkelteilen, zwischen deren Polschuhen der Rotor umlauffähig gelagert ist, wobei die Polschenkelteile mit den an ihnen vorgesehenen Polschuhen, dem Rotor und den Rotorlagerungen, die die Rotorlage im Verhältnis zu den Polschenkelteilen bestimmen, zu einer selbständigen Baueinheit zusammengefasst sind, die als Ganzes als Antriebsteil von den freien Enden der Eisenschenkel des Statoreisens abnehmbar ist.

Elektromotoren dieser Art sind bekannt und werden eingesetzt in kleinen elektrischen Geräten, beispielsweise Zitruspressen, Dosenöffnern und Trockenrasierapparaten. Für derartige zweipolige Einphasensynchronmotoren ist in der DE-A-3 301 263 (veröffentlicht 19-07-84 – entspricht EP-A-116 379, die am 22-08-84 veröffenlticht wurde und das Prioritätsdatum 17-01-83 hat) vorgeschlagen worden, durch Umbiegen des Statoreisens der Rotorachse einen Verlauf in Richtung der Mittelebene des Statoreisens zu geben. Auch ist dort vorgeschlagen, die Teile des Statoreisens, die die Statorpole enthalten, von dem Erregerteil, auf dem die Spulen angeordnet sind, abnehmbar zu gestalten. Für die Gestaltung eines funktionsfähigen Aufbaues werden keine Vorschläge unterbreitet.

Die kleinen Abmessungen von zweipoligen Einphasensynchronmotoren eröffnen die Möglichkeit, sich an die Wünsche bezüglich der Formgebung der Handhabung anzupassen. Dadurch werden andere Gerätekonzepte möglich.

Aus der DE-A-1 763 667 ist es bekannt, einen asymmetrischen Wechselstrommotor mit einem in sich geschlossenen, aus Einzelblechen aufgebauten, U-förmigen Ständer mit einer ausserhalb der Läuferachse liegenden Erregerspule derart auszuführen, dass ein die Läuferbohrung enthaltender Teil des Ständers aus diesem herausnehmbar bzw. in diesen einsetzbar ist. Die Läuferwelle steht hierbei jedoch immer senkrecht zu einem Flächenschnitt durch das Ständereisen. Der Sinn dieses teilbaren Aufbaues ist es, das Aufbringen der Spulen und die Montage des Motors zu vereinfachen.

Aus der BE-A-659 492 ist es darüber hinaus bekannt, bei einer Pumpe den Rotor gegenüber dem Stator durch Kunststoff abzukapseln, wobei Rotorteil und Statorteil trennbar sind.

Es ist Aufgabe der Erfindung, einen Elektromotor mit abnehmbarem, die Statorpole enthaltenden Statoreisenteil zu schaffen, bei dem die Statorachse mit der Ebene des Statoreisens zusammenfallen kann bzw. einen beliebigen Winkel damit einschliessen kann, um so eine gute Adapterbarkeit an einzelne Gerätefunktionsbereiche zu erreichen. Gleichzeitig damit wird ein ruhiger Lauf des Motors angestrebt.

Die gestellte Aufgabe ist erfindungsgemäss dadurch gelöst, dass bei einem zweipoligen Einphasensynchronmotor mit permanentmagnetischem Rotor das Antriebsteil derart ausgebildet ist, dass die Polschenkelteile und damit die Rotorwelle abhängig von der Ausbildung der gegenseitigen Anlageflächen von Eisenschenkel und Polschenkelteilen mit der Mittelebene des Statoreisens einen frei wählbaren Winkel einschliesst, wobei die Wellenrichtung zwischen einem Winkel von 0°–90° zu der Mittelebene verläuft, und dass zwischen den Eisenschenkeln und den Polschenkelteilen einstellbare Luftspalte vorgesehen sind, deren Dicke derart gewählt ist, dass das System aus Motor und Belastung im Betriebsspannungsbereich dynamisch ruhig läuft, wobei das Antriebsteil integrierter Bestandteil eines Gerätekomplexes ist, der zum motorisch bewegten Geräteteil gehört, und wobei der elektromagnetisch erregte Erregerteil des Motors zu einem als Grundkörper ausgebildeten Gerätekomplex gehört.

Eine solche Gerätekonstruktion lässt sich auf rationelle Weise gestalten. Der zweipolige Einphasensynchronmotor besteht aus zwei gut trennbaren Teilen, wobei die Trennstelle mit ihrem Luftspalt einen ruhigen Motorlauf herbeiführt. Die mit der Konstruktion eingeführte Modultechnik ermöglicht es, den Antriebsteil mit Polschuhen, Rotor und Rotorlagerungen so auszubilden, dass der Antriebsteil auf der Kopffläche des U-förmigen Statoreisens unter verschiedenen Winkeln aufsetzbar ist.

Bevorzugt werden dabei Ausführungsformen, bei denen die Achsrichtung des Rotors in der Ebene des Statoreisens verläuft. In diesem Fall braucht das Eisen im Polschuhbereich oder das Eisen an den freien Enden der Eisenschenkel nicht unter einem besonderen Winkel bearbeitet zu sein.

Die Gestaltung des Antriebsteiles ist dann besonders vorteilhaft, wenn der als selbständige Baueinheit ausgebildete Antriebsteil mittels einer Kunststoffummantelung zusammengehalten wird. In diesem Fall ist es für einen günstigen magnetischen Fluss günstig, wenn die die Polschuhe tragenden Polschenkelteile des Antriebsteils zu dem freien Enden der Eisenschenkel freiliegen.

Nach einer weiteren Ausgestaltung der Erfindung ist vorgesehen, dass das Polschuh- und/oder das Statoreisen aus gesinterten Eisenlegierungen bestehen. In diesem Fall sind die Gestaltungsmöglichkeiten des Antriebsteiles und des Motors allgemein noch wesentlich breiter.

In Weiterbildung der Erfindung ist vorgesehen, dass zwischen dem Erregerteil und dem Antriebsteil des Motors eine Trennwand vorgesehen ist, deren Dicke im Bereich zwischen den Eisenschenkeln und den Polschenkelteilen die Breite der Luftspalte bestimmt. Mit Hilfe einer solchen Trennwand lassen sich die Einstellung des Luftspaltes und ein ruhiger Lauf auf einfache Weise verwirklichen.

Nach einer weiteren Ausgestaltung der Erfindung ist vorgesehen, dass die Trennwand den Erregerteil flüssigkeitsdicht abschliesst. Auf diese Weise lässt sich der Antriebsteil ohne Schwierigkeiten mit Flüssigkeiten reinigen, ohne dass die elektrische Sicherheit des Gerätes beeinträchtigt wird.

Nach einer weiteren Ausgestaltung der Erfindung ist vorgesehen, dass der den Antriebsteil enthaltende Gerätekomplex ein Scherkopf und der den Erregerteil enthaltende Gerätekomplex der Handgriffkörper eines Trockenrasierapparates ist. Der stationäre Handgriffkörper einerseits und die die sich bewegenden Teile aufnehmende Scherkappe können so nach eigenen Gesichtspunkten entwickelt werden. Selbstverständlich ist das Ausführungsbeispiel eines Trockenrasierapparates nur als Beispiel zu betrachten für andere elektromotorisch betriebene Geräte, bei denen eine Aufteilung der Funktionskomplexe von Vorteil ist.

Die Erfindung wird anhand des in den Zeich-nungen dargestellten Ausführungsbeispieles nä-her erläutert. Es zeigen:

Fig. 1 in schaubildlicher Darstellung übereinander den elektromagnetischen Erregerteil und den permanentmagnetischen Antriebsteil eines zweipoligen Einphasensynchronmotors mit per-manentmagnetischem Rotor, wobei die Monta-geeinheit mit den Polschenkelteilen und dem Rotor ein in sich betriebsfertiges Antriebsteil ist, welches nur auf den elektromagnetischen Erregerteil aufgesetzt zu werden braucht,

Fig. 2 einen Schnitt durch die Montageeinheit mit Polschenkeleisen und Rotor im Schnitt längs des Linie II-II nach Fig.1.

Fig. 3 einen Schnitt durch den zusammengesetzten Motor nach Fig. 1 mit der aufgesetzten permanentmagnetischen Montageeinheit im Schnitt längs der Linie III-III nach Fig. 1, wobei die Rotorwelle in die Mittelebene des Statoreisens fällt,

Fig. 4 den Motor nach Fig. 3, wobei aber, abweichend von Fig. 3, die Rotorwelle senkrecht zur Mittelebene des Statoreisens verläuft,

Fig. 5 den Motor nach Fig. 3, wobei aber abweichend von Fig. 3 die Rotorwelle einen Winkel zwischen 0° und 90° mit der Mittelebene des Statoreisens einschliesst,

Fig. 6 ein elektromotorisch angetriebenes Gerät, in dem Erregerteil und Antriebsteil jeder für sich in trennbare Gerätekomplexe integriert sind.

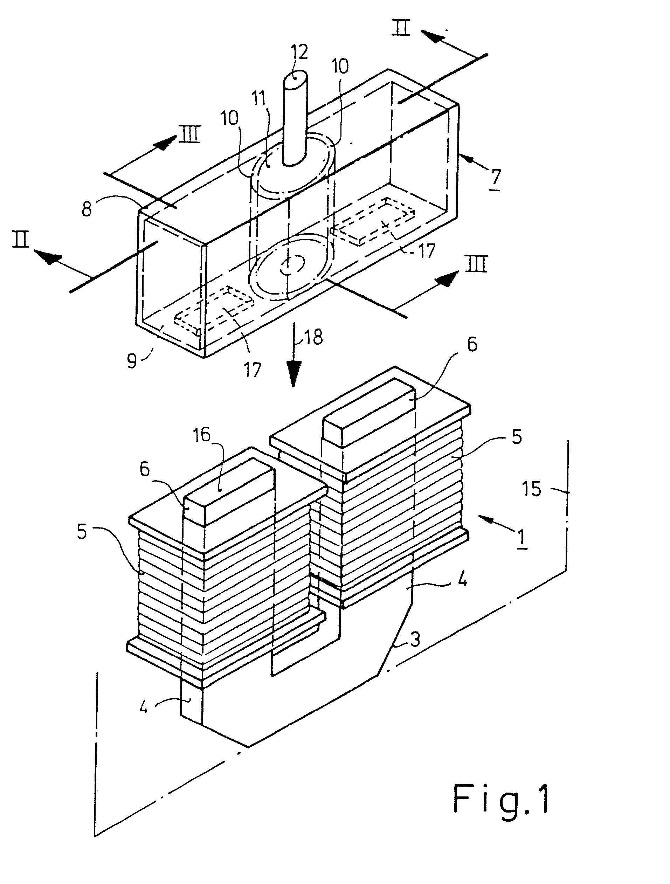

Die Darstellung in Fig. 1 zeigt im unteren Teil ein Erregerteil 1 eines Einphasensynchronmotors mit U-förmig gebogenem Statoreisen 3, mit Eisenschenkeln 4 und mit auf die Eisenschenkel 4 aufgesetzten Induktionsspulen 5. Die freien Enden 6 der Eisenschenkel 4 ragen an der Oberseite aus den Induktionsspulen 5 heraus.

Im oberen Teil der Darstellung nach Fig. 1 ist ein Antriebsteil 7 dargestellt, das aus einer Kunststoffeinfassung 8 besteht, in dem sich Polschenkelteile 9 befinden, die zwischen ihren Polschuhen 10 den Rotor 11 des zweipoligen Einphasensynchronmotors umfassen. Die Welle 12 des Rotors 11 ist in dem Kunststoffgehäuse in Lagern 13 und 14 gelagert.

Das Statoreisen 3 ist parallel zu einer Mittelebene 15 geschichtet. Die Polschenkelteile 9 des Polschuheisens in dem Antriebsteil 7 sind parallel zu Radialebenen durch den Rotor 11 geschichtet. Dieser Art der Schichtung kommt eine besondere Bedeutung zu, da die Schichtung der Eisenbleche des Statoreisens 3 aus ausgestanzten, übereinan-dergestapelten Blechteilen besteht, die, abgese-hen von den Endflächen 16, an den freien Enden 6 der Eisenschenkel 4 mit keiner besonderen Genauigkeit gearbeitet zu sein brauchen. Die Schichtung der Polschenkelteile 9 in dem Antriebsteil 7 in Richtung von Radialebenen durch den Rotor 1 hat den Vorteil, dass auch diese Pol-schenkelteilbleche einfache Stanzteile sein kön-nen, die alle den gleichen Schnitt haben.

Werden die Eisenteile aus Sintermaterial gebildet, dann entfällt die Schichtung selbstverständlich.

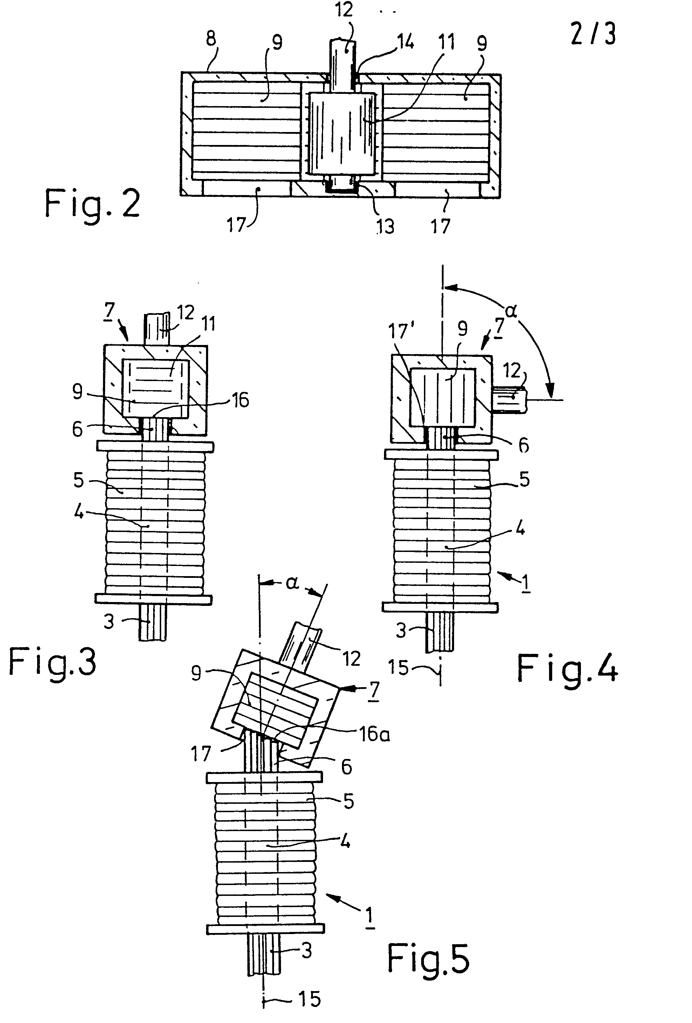

Fig. 2 zeigt anhand des Schnittes II-II durch den Antriebsteil 7 nach Fig. 1, wie die Kunststoffeinfassung 8 die Polschenkelteile 9 umschliesst und wie die Rotorlagerungen 13, 14 in die Kunststoffeinfassung 8 eingefügt sind. An der Unterseite des Kunststoffgehäuses 8 nach Fig. 2 sind Öffnungen 17 vorgesehen. An diesen Öffnungen liegt das Eisen der Polschenkelteile 9 frei.

Fig. 3 zeigt, wie der Antriebsteil 7 auf die freien Enden 6 der Eisenschenkel 4 aufgesetzt ist. An sich sorgt der permanentmagnetische Rotor 11 mit seiner Magnetkraft bereits für ein festes Haften des Antriebsteiles 7 an dem Statoreisen 3. Da bei dem Anlegen des elektrischen Wechselfeldes jedoch auch die magnetische Anziehung schwankt, ist es vorteilhaft, den Antriebsteil 7 auf die Oberflächen 16 an den freien Enden 6 der Eisenschenkel 4 aufzukleben. Fig. 3 zeigt im übrigen die zusammengefügten beiden Modulteile des zweipoligen Einphasensynchronmotors nach dem Zusammensetzen dieser Teile in Richtung des Pfeiles 18.

Fig. 4 zeigt eine Variante des zweipoligen Einphasensynchronmotors wobei der Antriebsteil 7 senkrecht zu der Richtung nach Fig. 3 montiert ist. Während bei der Darstellung nach Fig. 3 die Rotorwelle 12 in Richtung der Mittelebene 15 fällt, steht die Rotorwelle 12 bei der Darstellung nach Fig. 4 senkrecht zur Mittelebene 15. Bei der Darstellung nach Fig. 4 sind in dem Antriebsteil 7 Öffnungen 17' anstelle der Öffnungen 17 nach Fig. 2 vorgesehen, so dass das Polschuheisen 9 wieder unmittelbar auf den Oberflächen 16 der freien Enden 6 der Eisenschenkel aufliegt.

Fig. 5 zeigt, dass es durch eine schräge Lage der Flächen 16a an den freien Schenkelenden 6 möglich ist, den Antriebsteil 7 so auf den elektromagnetischen Erregerteil 1 aufzusetzen, dass die Mittelebene 15 und die Rotorwelle 12 einen Winkel zwischen 0° und 90° miteinander einschliessen. Fig. 5 zeigt dabei eine solche Anordnung mit einem Winkel von ca. 20°. Besonders begünstigt wird die Schrägstellung selbstverständlich durch die Verwendung von Sintereisenteilen. Die schräge Lage der Flächen 16a kann entweder durch einen schrägen Anschliff oder aber auch durch eine Versetzung der Bleche erfolgen.

3

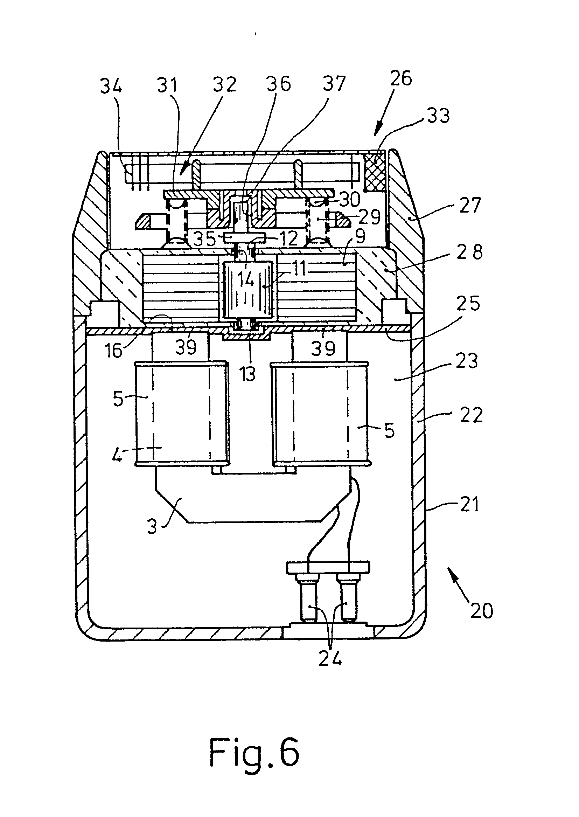

Fig. 6 zeigt anhand eines Trockenrasierapparates 20, wie es sich verwirklichen lässt, den Erregerteil 1 des Motors in einem motorischen Grundteil unterzubringen.

Der als Handgriff ausgebildete Grundkörper besteht aus einem zweischaligen Gehäuse 21, von dem nur eine Schale 22 von der Innenseite her dargestellt ist. Der Innenraum 23 des Gehäuses 21 nimmt den Erregerteil 1 des zweipoligen Einphasensynchronmotors auf. Der Erregerteil besteht wieder aus U-förmig gestanztem, aufeinandergeschichtetem Statoreisen 3 mit Eisenschenkeln 4, auf die Induktionsspulen 5 aufgeschoben sind. Über Anschlussstifte 24 ist der Motor beispielsweise ans Stromnetz anschliessbar. Die Endflächen 16 der Eisenschenkel 4 liegen an einer Trennwand 25 an, die den Innenraum 23 zum Scherkopf 26 derart abschliesst, dass der elektrische Erregerteil 1 beispielsweise flüssigkeitsdicht abgekapselt ist. Die Endflächen 16 können auch teilweise in die Trennwand 25 eingezogen sein. Dies hängt davon ab, wie breit die Luftspalte 39 aus dynamischen Gründen sein soll.

Der Scherkopf 26 besteht aus einem Scherkopfrahmen 27, der eine Brücke 28 trägt. Die Brücke 28 ersetzt die Kunststoffeinfassung 8a des Motors; sie nimmt die Lager 13 und 14 des permanentmagnetischen Rotors 11 und die Poleisenschenkel 9 auf. An der Brücke 28 stützen sich Andruckfedern 29 ab. Die gegenüberliegenden Federenden 30 drücken gegen das Unterteil 31 eines Schermessers 32, das von innen gegen eine gewölbte Scherfolie 33 gedrückt wird mit seinen Messerlamellen 34.

Auf der Motorwelle 12 ist eine Scheibe 35 angeordnet, die einen exzentrischen Antriebsstift 36 trägt, der in eine Führung 37 im Unterteil 31 des Schermessers 32 eingreift und beim Drehen der Motorwelle 12 das Schermesser 32 vibrierend hin und her bewegt.

Beim Abnehmen des Scherkopfes 26 von dem Gehäuse 21 werden zugleich Erregerteil 1 und Antriebsteil 7 des Trockenrasierapparates 20 voneinander getrennt.

## Patentansprüche

1. Elektromotor mit einem U-förmig gebogenen Statoreisen (3), auf dessen Eisenschenkeln (4) Induktionsspulen (5) vorgesehen sind, und mit vom Statoreisen trennbaren Polschenkelteilen (9), zwischen deren Polschuhen (10) der Rotor (11) umlauffähig gelagert ist, wobei die Polschenkelteile (9) mit den an ihnen vorgesehenen Polschuhen (10), dem Rotor (11) und den Rotorlagerungen (13, 14), die die Rotorlage im Verhältnis zu den Polschenkelteilen bestimmen, zu einer selbständigen Baueinheit (7) zusammengefasst sind, die als Ganzes als Antriebsteil von den freien Enden (6) der Eisenschenkel (4) des Statoreisens (3 abnehmbar ist, dadurch gekennzeichnet, dass bei einem zweipoligen Einphasensynchronmotor mit permanentmagnetischem Rotor das Antriebsteil derart ausgebildet ist, dass die Polschenkelteile und damit die Rotorwelle abhängig von der Ausbildung der gegenseitigen Anlageflächen (16, 16a) von Eisenschenkel (4) und Polschenkelteilen (9) mit der Mittelebene des Statoreisens einen frei wählbaren Winkel einschliesst, wobei die Wellenrichtung unter einem Winkel von 0°–90° zu der Mittelebene verläuft, und dass zwischen den Eisenschenkeln (4) und den Polschenkelteilen (9) einstellbare Luftspalte (39) vorgesehen sind, deren Dicke derart gewählt ist, dass das System aus Motor und Belastung im Betriebsspannungsbereich dynamisch ruhig läuft, wobei das Antriebsteil (7) integrierter Bestandteil eines Gerätekomplexes ist, der zum motorisch bewegten Geräteteil (27) gehört, und wobei der elektromagnetisch erregte Erregerteil (1) des Motors zu einem als Grundkörper (21) ausgebildeten Gerätekomplex gehört.

2. Elektromotor nach Anspruch 1, dadurch gekennzeichnet, dass das Antriebsteil auf die Kopfflächen (16) des U-förmigen Statoreisens (3) aufgesetzt ist.

3. Elektromotor nach den Ansprüchen 1 und/oder 2, dadurch gekennzeichnet, dass das als selbständige Baueinheit (7) ausgebildete Antriebsteil mittels einer Kunststoffummantelung (8) zusammengehalten wird.

4. Elektromotor nach einem oder mehreren der Ansprüche 1 bis 3, dadurch gekennzeichnet, dass die die Polschuhe (10) tragenden Polschenkelteile (9) des Antriebsteils (7) zu dem freien Ende (6) der Eisenschenkel (4) freiliegen.

5. Elektromotor nach den Ansprüchen 1 bis 4, dadurch gekennzeichnet, dass das Polschuh- und/oder das Statoreisen (3, 9) aus gesinterten Eisenlegierungen bestehen.

6. Elektromotor nach einem oder mehreren der Ansprüche 1 bis 4, dadurch gekennzeichnet, dass die Polschenkelteile (9) in der als Antriebsteil dienenden Baueinheit (7) parallel zu Radialebenen des Rotors (11) geschichtet ist.

7. Elektromotor nach Anspruch 1, dadurch gekennzeichnet, dass zwischen dem Erregerteil (1) und dem Antriebsteil (7) des Motors eine Trennwand vorgesehen ist, deren Dicke im Bereich zwischen den Eisenschenkeln (4) und den Polschenkelteilen (9) die Breite der Luftspalte (39) bestimmt.

8. Elektromotor nach Anspruch 7, dadurch gekennzeichnet, dass die Trennwand (25) den Erregerteil (1) flüssigkeitsdicht abschliesst.

9. Elektromotor nach Anspruch 1, dadurch gekennzeichnet, dass der den Antriebsteil (7) enthaltende Gerätekomplex ein Scherkopf (27) und der den Erregerteil (1) enthaltende Gerätekomplex der Handgriffkörper (21) eines Trockenrasierapparates (20) ist.

## Revendications

1. Moteur électrique muni d'un fer statorique courbé en U (3) sur les branches (4) duquel sont placées des bobines inductrices (5), et d'éléments polaires (9) pouvant être séparés du fer statorique et entre les épanouissements polaires (10) desquels le rotor (11) est logé de façon rotative, éléments polaires (9) qui, conjointement avec les épanouissements polaires (10) prévus sur ceux-ci, et avec le rotor (11) et les logements de rotor (13, 14) déterminant la position du rotor par rapport aux éléments polaires, forment une unité de construction indépendante (7) qui peut être enlevée dans son ensemble, comme partie d'entraînement, des extrémités libres (6) des branches (4) du fer statorique (3), caractérisé en ce que, dans un moteur synchrone monophasé bipolaire muni d'un rotor à aimantation permanente, la partie d'entraînement est réalisée de façon que, les éléments polaires et, par conséquent, l'arbre du rotor font avec le plan médian du fer statorique un angle pouvant être choisi librement selon la réalisation des faces de contact mutuel (16, 16a) des branches statoriques (4) et des éléments polaires (9), la direction de l'arbre faisant avec le plan médian un angle compris entre 0° et 90°, et en ce qu'entre les branches statoriques (4) et les éléments polaires (9), sont prévus des entrefers réglables (39) dont la largeur a été choisie de façon à assurer un fonctionnement dynamiquement stable du système du moteur et de la charge dans la gamme de tensions de fonctionnement, la partie d'entraînement (7) étant un constituant intégré d'une unité d'appareil appartenant à la partie d'appareil (27) entraînée par le moteur, et la partie d'excitation (1) du moteur, excitée par voie électromagnétique, appartenant à une unité d'appareil constituant une partie de base (21).

2. Moteur électrique selon la revendication 1, caractérisé en ce que la partie d'entraînement est placée sur les surfaces terminales (16) du fer statorique en U (3).

3. Moteur électrique selon la revendication 1 ou 2, caractérisé en ce que la partie d'entraînement réalisée sous la forme d'une unité de construction indépendante (7) est maintenue assemblée par un enrobage en matière plastique (8).

4. Moteur électrique selon une ou plusieurs des revendications 1 à 3, caractérisé en ce que les éléments polaires (9) de la partie d'entraînement (7), portant les épanouissements polaires (10), sont découverts à l'extrémité libre (6) des branches statoriques (4).

5. Moteur électrique selon les revendications 1 à 4, caractérisé en ce que le fer polaire et/ou le fer statorique (3, 9) sont constitués par des alliages de fer frittés.

6. Moteur électrique selon une ou plusieurs des revendications 1 à 4, caractérisé en ce que les éléments polaires (9) dans l'unité de construction (7) servant de partie d'entraînement sont feuilletés dans une direction parallèle à des plans radiaux du rotor (11).

7. Moteur électrique selon la revendication 1, caractérisé en ce qu'entre la partie d'excitation (1) et la partie d'entraînement (7) du moteur, est prévue une cloison dont l'épaisseur dans la partie située entre les branches statoriques (4) et les éléments polaires (9) détermine la largeur des entrefers (39).

8. Moteur électrique selon la revendication 7, caractérisé en ce que la cloison (25) ferme la partie d'excitation (1) de façon étanche aux liquides.

9. Moteur électrique selon la revendication 1, caractérisé en ce que l'unité d'appareil comportant la partie d'entraînement (7) est une tête de rasage (27) et l'unité d'appareil comportant la partie d'excitation (1) est la partie d'un rasoir à sec (20) qui sert de poignée.

**Claims**

1. An electric motor comprising a U-shaped stator member (3) whose stator limbs (4) carry induction coils (5), and pole-shank members (9) which are detachable from the stator member and between whose pole shoes (10) the rotor (11) is mouted for rotation, the pole-shank members (9) with the pole shoes (10) arranged on them, the rotor (11) and the rotor bearing means (13, 14), which determine the rotor position in relation to the pole-shank members, being combined to form a separate constructional unit (7) which constitutes a driving part which is bodily detachable from the free ends (6) of the stator limbs (4) of the stator member (3), characterised in that in the two-pole single-phase synchronous motor with permanent-magnet rotor the driving part is constructed in such a way that the pole-shank members and thus the rotor shaft, depending on the construction of the contact surfaces (16, 16a) of the stator limbs (4) and the pole-shank members (9), extend(s) at a freely selectable angle relative to the centre plane of the stator member, the shaft being directed at an angle of 0°–90° relative to the centre plane, and in that adjustable air gaps (39) are formed between the stator limbs (4) and the pole-shank members (9), the width of said air gaps being selected in such a way that the system comprising the motor and the load operates in a dynamically stable manner within the operating-voltage range, the driving part (7) being an integrated part of an appliance assembly associated with the motor-driven appliance part (27), and the electromagnetic exciter part (1) of the motor forms part of an appliance assembly constructed as a basic appliance section (21).

2. An electric motor as claimed in Claim 1, characterised in that the driving part is mounted on the end surfaces (16) of the U-shaped stator member (3).

3. An electric motor as claimed in Claims 1 and/or 2, characterised in that the driving part, which constitutes a separate constructional unit, is accommodated in a plastics encapsulation (8).

4. An electric motor as claimed in any one or several of the Claims 1 to 3, characterised in that the pole-shank members (9) of the driving part (7), which carry the pole shoes (10), are exposed at the location where they face the free ends (6) of the stator limbs (4).

5. An electric motor as claimed in Claims 1 to 4, characterised in that the pole-shank members and/or the stator member (3, 9) are made of sintered iron-alloys.

6. An electric motor as claimed in any one or several of the Claims 1 to 4, characterised in that the pole-shank members (9) in the constructional unit (7) constituting the driving part are laminated parallel to radial planes of the rotor (11).

7. An electric motor as claimed in Claim 1, characterised in that a partition is arranged between the exciter part (1) and the driving part (7) of the motor, the thickness of the partition in the area between the stator limbs (4) and the pole-shank members (9) determining the width of the air gap (39).

8. An electric motor as claimed in Claim 7, characterised in that the partition (25) provides liquid-tight sealing of the exciter part (1).

9. An electric motor as claimed in Claim 1, characterised in that the appliance assembly comprising the driving part (7) is a shaver head (27) and the appliance assembly comprising the exciter part (1) is the part (21) by which a dry-shaver (20) is held.

Fig.1

Fig. 2

Fig.3

Fig.4

Fig.5

Fig.6